# EUROPEAN PATENT SPECIFICATION

(11) **EP 2 021 398 B1**
(45) Date of publication and mention of the grant of the patent: **23.03.2016**
(21) Application number: 07712078.0
(22) Date of filing: 23.01.2007
(51) Int. Cl.: C08G 73/10, C08L 79/08

(54) **CATALYSIS OF POLYIMIDE CURING**
KATALIESIERUNG FÜR POLYIMIDEHÄRTUNG
CATALYSE DU DURCISSEMENT D'UN POLYIMIDE

(30) Priority: 16.03.2006 US 377599
(43) Date of publication of application: 11.02.2009
(73) Proprietor: Altana Electrical Insulation GmbH, 46483 Wesel (DE)
(72) Inventor: MURRAY, Thomas, J., Chesterfield, Missouri 63005 (US); MEISTER, Philip, R., Belleville, IL 62223 (US)
(74) Representative: Fitzner, Uwe
(86) International application number: PCT/EP2007/050622
(87) International publication number: WO 2007/104593

(56) References cited:
- US-A- 5 532 334
- US-A1- 2002 090 524

## Description

### BACKGROUND OF THE INVENTION

This invention relates to a method of increasing the glass transition temperature of a polyimide film, a method of decreasing the temperature and time for curing polyimide films and a method of reducing void formation in cured polyimide films. The compositions include a polyimide oligomer/polymer and a phosphorus based catalyst.

Polyimide resins are high-temperature resistant polymers that retain their physical properties during short-term exposures at temperatures of up to 555°C (1030°F), and can be used for prolonged periods of time at temperatures ranging up to approximately 333°C (630°F). Polyimide resins include condensation polyimide resins, addition polyimide resins, thermoplastic polyimides (e.g., polyamideimide and polyetherimide resins) and polyesterimide resins. All of these polymers have excellent electrical and physical properties, as well as high thermal and oxidative stability. Because of this combination of properties, these polyimides are used in aerospace, electronics and various other industrial applications. In these applications, molecular weights of the condensation polyimides (polyamideimides and polyesterimides) are kept low so they can be applied onto a substrate in solution, and to permit thermoplastic processing.

Subsequent heating (in the case of a laminate or a molded article under pressure) carries the polymerization reaction further, increasing molecular weight, and developing the product's final properties. However, evolution of a water by-product during this second reaction step causes some porosity which is undesirable for applications involving laminates, moldings, and films. This drawback is partially eliminated by the addition of polyimides to the solution which cross-link through an addition reaction. Fully imidized polyimides are capable of producing low-void laminates, since ring closure prevents the water by-product from being released during curing. However, these addition polyimides are poor for film formation, are difficult to synthesize, result in lower thermal properties, and are expensive to use.

Due to the limitations of both condensation and addition polyimides, a new polyimide material is desired which can achieve the desirable high thermal properties of condensation polyimides; while, minimizing the outgassing of water upon final cure. Phosphorus based catalysis of polyamideimide resin synthesis has been known and reported in the literature since the 1980's. In these applications, triphenylphosphite (TPP) is added in stoichiometric amounts to trimellitic anhydride and a diamine, and the resulting reaction is further facilitated by the addition of excess pyridine in solution. The TPP activates the carboxylic acid group to achieve amide formation with the diamine. However, this process has not been widely used commercially; due to the high cost of the catalysts and the large amounts of them needed to synthesize the polymer backbone.

TPP has been post-added in the extrusion of polyester and polyamide resins. In their article, High-Temperature Reactions of Hydroxyl and Carboxyl PET Chain End Groups in the Presence of Aromatic Phosphite, Aharoni, S.M. et al, Journal of Polymer Science: Part A, Polymer Chemistry Vol. 24, pp. 1281-1296 (1986), the authors added varying levels of TPP to polyethyleneterephthalate (PET) and found an increase in molecular weight compared to a degradation in molecular weight without the catalyst. Similar findings were reported for polyamide resins such as nylon 6,6.

U.S. Pat. No. 4,749,768 describes a process for producing thermoplastic processable aromatic polyamides with phosphorus catalysis. In this patent, a diamine is condensed with a dicarboxylic acid with catalysis by either triphenylphosphite or H₃POₙ acid.

Japanese Pat. No. 2005213387, describes a method in which thermosetting resins in the presence of 0.01-10 phr phosphite esters show low emission of volatile organic compounds. The thermosetting resin system is an unsaturated polyester with a styrene monomer.

From US 2002/0090524 A1 it is known to use phosphorous compounds in the preparation of the resins as gelation-inhibiting agent, as stabilizers in the process of polymerization of polyamide acid.

### BRIEF SUMMARY OF THE INVENTION

In accordance with the invention, there is described the use of a phosphorus based catalyst to promote the cure of polyimide resins. Use of the catalyst dramatically increases glass transition temperature. A second aspect of the invention is that the catalyst minimizes the amount of water generated, thereby minimizing void formation in a cured substrate. A third aspect of the invention is that the catalyst accelerates cure thereby minimizing the long curing procedures needed with polyimides such as a polyamideimide resin. Additionally, the catalyst allows for temperature at which the curing procedure is carried out to be substantially reduced than is required when a catalyst is absent. The result is a new polyimide material having the desired high thermal properties of condensation polyimides with minimal outgassing of water during cure.

Other objects and features will be in part apparent and in part pointed out hereinafter.

### DETAILED DESCRIPTION OF INVENTION

The following detailed description illustrates the invention by way of example and not by way of limitation. This description will clearly enable one skilled in the art to make and use the invention, and describes several embodiments, adaptations, variations, alternatives and uses of the invention, including what we presently believe is the best mode of carrying out the invention. As various changes could be made in the above constructions without departing from the scope of the invention, it is intended that all matter contained in the above description or shown in the accompanying drawings shall be interpreted as illustrative and not in a limiting sense.

Accordingly, the instant invention addresses
a first method of increasing the glass transition temperature of a polyimide film, the method comprising: mixing a phosphorous catalyst with a polyimide, the catalyst being added in an amount of between 0.1% to 10% by weight of the polyimide solution; coating a substrate with the polyimide/catalyst mixture; and curing the polyimide by heating the coated substrate to form a polyimide film, a second of decreasing the temperature and time for curing polyimide films, the method comprising: mixing a phosphorous catalyst with a polyimide, the catalyst being added in an amount of between 0.1% to 10% by weight of the polyimide solution; coating a substrate with the polyimide/catalyst mixture; and curing the polyimide by heating the coated substrate at a temperature of greater than 100°C for up to 30 minutes
and a third method of reducing void formation in cured polyimide films, the method comprising: mixing a phosphorous catalyst with a polyimide, the catalyst being added in an amount of between 0.1 % to 10% by weight of the polyimide solution; coating a substrate with the polyimide/catalyst mixture; and curing the polyimide by heating the coated substrate at a temperature greater than 100°C for up to 30 minutes.

Polyimide resins useful in the present invention are commonly used in solvent based coatings, films, prepreg coatings, laminates, compression molding, and thermosetting resin extrusion. These resins include condensation polyimides, addition polyimides and thermoplastic polyimides. Useful polyimide resins are obtained by condensation polymerization between a diamine and a dianhydride. Non-limiting examples of diamines include:

X-R"-(-NH2)n

where R" is an organic radical, n is at least 2, and X is hydrogen, an amino group or an organic group including those having at least one amino group.

Diamines useful for this purpose are expressed by the formula:

R"'-(-NH2)n

where R"' is a member selected from a class consisting of organic radicals of at least two carbon atoms (both halogenated and unhalogenated) including but not limited to, e.g., hydrocarbon radicals of up to 40 carbon atoms, and groups consisting of at least two aryl residues attached to each other through the medium of a member selected from the class consisting of an alkylene radical of from 1 to 10 carbon atoms, --S--, 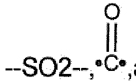 and --O--,et., and n is again at least 2.

Among specific useful amines, alone or in admixture, are the following:
p-xylene diamine
bis(4-amino-cyclohexyl)methane
hexamethylene diamine
heptamethylene diamine
octamethylene diamine
nonamethylene diamine
decamethylene diamine
3-methyl-heptamethylene diamine
4,4'-dimethylheptamethylene diamine
2,11-diamino-dodecane
1,2-bis-(3-amino-propoxy)ethane
2,2-dimethyl propylene diamine
3-methoxy-hexamethylene diamine
2,5-dimethylhexamethylene diamine
2,5-dimethylheptamethylene diamine
5-methylnonamethylene diamine
1,4-diamino-cyclo-hexane
1,12-diamino-octadecane
2,5-diamino-1,3,4-oxadiazole
H2N(CH2)3O(CH2)2O(CH2)3NH2
H2N(CH2)3S(CH2)3NH2
H2N(CH2)3N(CH3)(CH2)3NH2
meta-phenylene diamine
para-phenylene diamine
4,4'-diamino-diphenyl propane
4,4'-diamino-diphenyl methane benzidine
4,4'-diamino-diphenyl sulfide
4,4'-diamino-diphenyl sulfone
3,3'-diamino-diphenyl sulfone
4,4'-diamino-diphenyl ether
2,6-diamino-pyridine
bis(4-amino-phenyl)diethyl silane
bis(4-amino-phenyl)diphenyl silane
bis(4-amino-phenyl)phosphine oxide
4,4'-diaminobenzophenone
bis(4-amino-phenyl)-N-methylamine
bis(4-aminobutyl)tetramethyldisiloxane
1,5-diaminonaphthalene
3,3'-dimethyl-4,4'-diamino-biphenyl
3,3'-dimethoxy benzidine
2,4-bis(beta-amino-t-butyl)toluene toluene diamine
bi(para-beta-amino-t-butyl-phenyl)ether
para-bis(2-methyl-4-amino-pentyl)benzene
para-bis(1,1-dimethyl-5-amino-pentyl)benzene
m-xylylene diamine
poly(methylene) polyaniline

The dianhydride can be expressed by the following structure 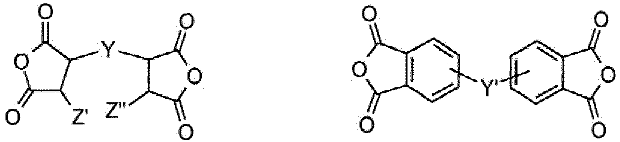 where Y is an organic group, and Z' and Z" are hydrogen or an organic group. Y' can be O, NR, SO2, S, C=O, alkyl, alkylfluoro, or an aromatic group. Non-limiting examples of dianhydrides include: Benzophenonetetracarboxylic acid anhydride, Pyromellitic dianhydride and 3,3',4,4'-biphenyltetracarboxylic dianhydride (s-, a-, and i- versions).

A subset of polyimide polymers are polyamideimide resins which are mainly produced in one of three ways. One way utilizes a polyisocyanate with a carboxylic anhydride. Any polyisocyanate, that is, any isocyanate having two or more isocyanate groups, whether blocked or unblocked, can be used in making polyamideimides. Blocked isocyanates using, for example, phenols or alcohols as the blocking constituent, can also be used. In general, they provide a higher molecular weight of the final material and this is advantageous, for example, in varnishes. Conversely, unblocked isocyanates provide more flexible final materials. Regardless of which is used, as much of the blocking material must be evaporated off as possible, and there is no advantage, from a purely reaction point of view, as to which material is used. A typical blocked polyisocyanate is Mondur S™ in which mixtures of 2,4- and 2,6-tolylene diisocyanate are reacted with trimethylol propane, and blocked by esterification with phenol in the proportions of three moles of isocyanate, one mole of trimethylol propane, and three moles of phenol. Another blocked polyisocyanate is Mondur SH™, in which isocyanate groups of mixed 2,4-and 2,6-tolylene diisocyanate are blocked by esterification with cresol. Polyisocyanates which are useful alone, or in admixture, include:
tetramethylenediisocyanate
hexamethylenediisocyanate
1,4-phenylenediisocyanate
1,3-phenylenediisocyanate
1,4-cyclohexylenediisocyanate
2,4-tolylenediisocyanate
2,5-tolylenediisocyanate
2,6-tolylenediisocyanate
3,5-tolylenediisocyanate
4-chloro-1,3-phenylenediisocyanate
1-methoxy-2,4-phenylenediisocyanate
1-methyl-3,5-diethyl-2,6-phenylenediisocyanate
1,3,5-triethyl-2,4-phenylenediisocyanate
1-methyl-3,5-diethyl-2,4-phenylenediisocyanate
1-methyl-3,5-diethyl-6-chloro-2,4-phenylenediisocyanate
6-methyl-2,4-diethyl-5-nitro-1,3-phenylenediisocyanate
p-xylylenediisocyanate
m-xylylenediisocyanate
4,6-dimethyl-1,3-xylylenediisocyanate
1,3-dimethyl-4,6-bis-(b-isocyanatoethyl)-benzene
3-(a-isocyanatoethyl)-phenylisocyanate
1-methyl-2,4-cyclohexylenediisocyanate
4,4'-biphenylenediisocyanate
3,3'-dimethyl-4,4'-biphenylenediisocyanate
3,3'-dimethoxy-4,4'-biphenylenediisocyanate
3,3'-diethoxy-4,4-biphenylenediisocyanate
1,1-bis-(4-isocyanatophenyl)cyclohexane
4,4'-diisocyanato-diphenylether
4,4'-diisocyanato-dicyclohexylmethane
4,4'-diisocyanato-diphenylmethane
4,4'-diisocyanato-3,3'-dimethyldiphenylmethane
4,4'-diisocyanato-3,3'-dichlorodiphenylmethane
4,4'-diisocyanato-diphenyldimethylmethane
1,5-naphthylenediisocyanate
1,4-naphthylenediisocyanate
4,4',4"-triisocyanato-triphenylmethane
2,4,4'-triisocyanato-diphenylether
2,4,6-triisocyanato-1-methyl-3,5-diethylbenzene
o-tolidine-4,4'-diisocyanate
m-tolidine-4,4'-diisocyanate
benzophenone-4,4'-diisocyanate
biuret triisocyanates
polymethylene polyphenylene isocyanate

The carboxylic anhydride mainly includes trimellitic anhydride. Other potential materials include trimellitic acid and a dehydrating material.

A second way of producing polyamideimide resins involves the use of a diamine and a carboxylic anhydride acid chloride. This is the preferred route to synthesis of polyamideimide polymers sold by Solvay Advanced Polymers, L.L.C. under the name TORLON^{®}. The carboxylic anhydride acid chloride is preferably trimellitic anhydride acid chloride. The diamines include ODA (oxydianiline) and MDA (methylenediphenyldiamine).

A third and less common way of producing polyamideimide resins involves the condensation of an organic diamine with two equivalents of carboxylic anhydride. In general, a slight molar excess of carboxylic acid anhydride and organic polyamine is heated from about 200°C (392°F) to about 245°C (473°F) in an inert atmosphere and with a solvent. This drives off any water formed, and forms an amideimide group containing a prepolymer. A polyisocyanate is then added and the mixture reacted to form a block amide-imide prepolymer having a relatively high molecular weight. This is then cured (as by heating) to form a flexible film or coating.

As taught, for example, in United States patent 3,817,926, up to 75 mole percent of the carboxylic anhydride can be replaced by a substituted or unsubstituted aliphatic anhydride or diacid such as oxalic, maleic, succinic, glutaric, adipic, pimelic, suberic, azelaic, sebacic and dodecanedioic, as well as unsaturated materials including maleic and fumaric materials, among others. Such acids are expressed by the formula:

HOOC--R'--COOH

where R' is a divalent saturated or unsaturated aliphatic group, or one containing a carbon-to-carbon double bond and having from about one to 40 carbon atoms. The anhydrides can be expressed by the formula:

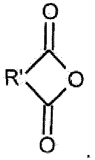

A phosphite catalyst can be added to the resin in the range of 0.01 % to 10% by weight of the resin. The catalyst can be an aryl, arylalkyl or alkyl phosphorus based catalyst. Arylphosphites, such as a diaryl- or triaryl-phosphite, work well. Alkyldiarylphosphites and dialkylarylphosphites should also work. Triphenylphosphite (TPP) can be produced, in-situ, by the addition of a phenol- or a phenolic-like substance to an activated phosphorus compound. Such activated phosphorus compounds include, for example, species such as phosphorus trichloride or phosphorus tribromide.

Fillers and additives can also be incorporated into the polymer matrix. Non-limiting examples of fillers include titanium dioxide, alumina, silica, graphite, carbon black, and fiberglass. Other additives include thickeners, plasticizers, flow agents, antiblocking agents, antistatic agents, antioxidants, hindered amine light stabilizers, and ultraviolet light stabilizers.

In a coating application, the polyimide solution is mixed with the phosphorus catalyst. The solution is either directly coated onto a substrate, web, or composite material. The solvent is then evaporated by thermal or vacuum means and the remaining resin cured by thermal means including oven heat, inductive heating, or infrared sources.

A polyimide coating solution, such as Ultratherm® A 828 (available from The P.D. George Co.), requires temperatures of greater than 150°C (≈300°F) to achieve enough cure so that a chemically resistant film can be obtained. The same polyimide material can be cured at less than 125°C (257°F) with phosphorus catalyst. Catalyst concentration also impacts the rate at which cure is achieved.

A polyamideimide coating solution, such as Tritherm® A 981 (available from The P.D. George Co.), requires temperatures of greater than 240°C (≈465°F) to achieve enough cure so that a chemically resistant film is obtained. The same polyamideimide material can be cured at 200°C (392°F) with a phosphorus catalyst. Again, catalyst concentration also impacts the rate at which cure is achieved.

Glass transition temperature is also dramatically impacted by phosphorus based catalysis. A polyamideimide resin, such as Tritherm® A 981 (available from The P.D. George Co.), typically has a glass transition temperature of approximately 270-300°C (≈520-570°F). Multiple reheats will still demonstrate a similar glass transition temperature. Phosphorus based catalysis dramatically changes the thermoplastic properties. Multiple reheats of up to 400°C (≈750°F) increases the glass transition from roughly 270°C (≈520°F) to greater than 350°C (≈660°F). This dramatic increase is also observed using Solvay based Torlon® Al-10.

In an extrudable material such as Torlon® 4203, an un-reinforced polyamideimide containing 3% titanium and 0.5% fluoropolymer available from Solvay Advanced Polymers, LLC, TPP (triphenylphosphite) can be added prior to solvent stripping to make a powdered resin. It should also possible to compound the resin powder with TPP after solvent removal. We have also found that extruded Torlon® 4203 (fully imidized) can be post-treated with TPP and further cured upon heat treatment. Either method should allow for post-heat treatment to obtain a final cured part with improved glass transition and physical properties.

### EXAMPLES

### Example 1: (comparative)

Glass panels were coated with a Tritherm®A 981-H (The P.D. George Co.) using a #80 Meier bar. The panels were cured for 15 and 30 minutes in a Thermotron forced air oven at temperatures of 150°C (302°F), 175°C (347°F), and 200°C (392°F). The cured films had an average thickness of 15 microns. A small portion of the resulting film was placed in dimethyl formamide(DMF) to determine solubility. The results are included in Table I below.

### Example 2:

To 100g of Tritherm®A 981-H, add 2g of triphenyl phosphite (TPP). Stir the mixture, using a stir bar, until the sample is uniform. Glass panels were coated with the sample using a #80 Meier bar. The panels were then cured for 15 and 30 minutes in a Thermotron forced air oven at temperatures of 150°C, 175°C, and 200°C. The cured films had an average thickness of 15 microns. A small portion of the resulting film was placed in dimethyl formamide (DMF) to determine solubility. The results are also included in Table I.

**Table I**

| Example | Resin | TPP Conc(%) | Cure Time(min) | Cure Temp(°C) | Solubility |
|---|---|---|---|---|---|
| 1 (comp.) | Tritherm®A 981-H | 0 | 15 | 150 | Yes |
| 1 (comp.) | Tritherm®A 981-H | 0 | 30 | 150 | Yes |
| 1 (comp.) | Tritherm®A 981-H | 0 | 15 | 175 | Yes |
| 1 (comp.) | Tritherm®A 981-H | 0 | 30 | 175 | Yes |
| 1 (comp.) | Tritherm®A 981-H | 0 | 15 | 200 | Yes |
| 1 (comp.) | Tritherm®A 981-H | 0 | 30 | 200 | Yes |
| 2 | Tritherm®A 981-H | 2 | 15 | 150 | Yes |
| 2 | Tritherm®A 981-H | 2 | 30 | 150 | Yes |
| 2 | Tritherm®A 981-H | 2 | 15 | 175 | Partial |
| 2 | Tritherm®A 981-H | 2 | 30 | 175 | Partial |
| 2 | Tritherm®A 981-H | 2 | 15 | 200 | No |
| 2 | Tritherm®A 981-H | 2 | 30 | 200 | No |

As seen from Table I, the polyamideimide film made from Tritherm A 981-H was soluble in DMF irrespective of the cure time and cure temperature. However, the polyamideimide film made from Tritherm A 981-H when mixed with 2% TPP, the resulting film was not soluble in DMF when cured 200°C and was only partially soluble in DMF when cured at 175°C. The film was soluble in DMF when cured at 150°C. These results show that the addition of TPP in a small amount (i.e., 2%) produces a chemically resistant film when cured at 200°C, and a partially chemically resistant film when cured at 175°C. However, without the addition of the TPP, the Tritherm would have to be cured at higher temperatures and/or for longer periods of time to produce a chemically resistant film.

### Example 3: (comparative)

Glass panels were coated with Tritherm®A 981-H using a #80 Meier bar. The panels were cured for 30 minutes in a Thermotron forced air oven at temperatures of 200°C (392°F) and 260°C (500°F). The cured films had an average thickness of 15 microns. The glass transition temperature of the film was determined by differential scanning calorimetry (DSC). Each sample was heated to 400°C (752°F), cooled to room temperature (25°C, or 77°F), reheated to 400°C, cooled to room temperature again, then reheated to 400°C again. The glass transition temperature was determined after each heating cycle. The results are included in Table II.

### Example 4:

To 100g of Tritherm®A 981-H, add 2g of TPP. Stir the mixture, using a stir bar, until the sample is uniform. Glass panels were coated with the sample using a #80 Meier bar. The panels were cured 30 minutes in a Thermotron forced air oven at temperatures of 200°C and 260°C. The cured films had an average thickness of 15 microns. The glass transition temperature of the film was determined by DSC. Each sample was heated to 400°C, cooled to room temperature (25°C), reheated to 400°C, cooled to room temperature again, then reheated to 400°C again. The glass transition temperature was determined after each heating cycle. The results are also included in Table II.

### Example 5:

To 100g of Tritherm®A 981-H, add 1g of TPP. Stir the mixture, using a stir bar, until the sample is uniform. A glass panel was coated with the sample using a #80 Meier bar. The panel was cured 30 minutes in a Thermotron forced air oven at a temperature of 260°C. The cured film had an average thickness of 15 microns. The glass transition temperature of the film was determined by DSC. Each sample was heated to 400°C, cooled to room temperature (25°C), reheated to 400°C, cooled to room temperature again, then reheated to 400°C again. The glass transition temperature was determined after each heating cycle. The results are included in Table II.

### Example 6:

To 100g of Tritherm®A 981-H, add 0.5g of TPP. Stir the mixture, using a stir bar, until the sample is uniform. A glass panel was coated with the sample using a #80 Meier bar. The panel was cured 30 minutes in a Thermotron forced air oven at a temperature of 260°C. The cured film had an average thickness of 15 microns. The glass transition temperature of the film was determined by DSC. Each sample was heated to 400°C, cooled to room temperature (25°C), reheated to 400°C, cooled to room temperature again, then reheated to 400°C again. The glass transition temperature was determined after each heating cycle. The results are included in Table II.

### Example 7:

To 100g of Tritherm®A 981-H, add 0.2g of TPP. Stir the mixture, using a stir bar, until the sample is uniform. A glass panel was coated with the sample using a #80 Meier bar. The panel was cured 30 minutes in a Thermotron forced air oven at a temperature of 260°C. The cured film had an average thickness of 15 microns. The glass transition temperature of the film was determined by DSC. Each sample was heated to 400°C, cooled to room temperature (25°C), reheated to 400°C, cooled to room temperature again, then reheated to 400°C again. The glass transition temperature was determined after each heating cycle. The results are included in Table II.

### Example 8:

To 100g of Tritherm®A 981-H, add 2g of diphenyl phosphite (DPP). Stir the mixture, using a stir bar, until the sample is uniform. Glass panels were coated with the sample using a #80 Meier bar. The panels were cured 30 minutes in a Thermotron forced air oven at temperatures of 200°C and 260°C. The cured films had an average thickness of 15 microns. The glass transition temperature of the film was determined by DSC. Each sample was heated to 400°C, cooled to room temperature (25°C), reheated to 400°C, cooled to room temperature again, then reheated to 400°C again. The glass transition temperature was determined after each heating cycle. The results are included in Table II.

### Example 9:

To 100g of Tritherm®A 981-H, add 1g of DPP. Stir the mixture, using a stir bar, until the sample is uniform. A glass panel was coated with the sample using a #80 Meier bar. The panel was cured 30 minutes in a Thermotron forced air oven at a temperature of 260°C. The cured film had an average thickness of 15 microns. The glass transition temperature of the film was determined by DSC. Each sample was heated to 400°C, cooled to room temperature (25°C), reheated to 400°C, cooled to room temperature, then reheated to 400°C again. The glass transition temperature was determined after each heating cycle. The results are included in Table II.

### Example 10:

To 100g of Tritherm®A 981-H, add 0.5g of DPP. Stir the mixture, using a stir bar, until the sample is uniform. A glass panel was coated with the sample using a #80 Meier bar. The panel was cured 30 minutes in a Thermotron forced air oven at a temperature of 260°C. The cured film had an average thickness of 15 microns. The glass transition temperature of the film was determined by DSC. Each sample was heated to 400°C, cooled to room temperature (25°C), reheated to 400°C, cooled to room temperature again, then reheated to 400°C again. The glass transition temperature was determined after each heating cycle. The results are included in Table II.

### Example 11: (comparative)

A glass panel was coated with Torlon® AI-10 (Solvay) using a #80 Meier bar. The panel was cured for 30 minutes in a Thermotron forced air oven at a temperature of 260°C. The cured film had an average thickness of 15 microns. The glass transition temperature of the film was determined by differential scanning calorimetry (DSC). Each sample was heated to 400°C, cooled to room temperature (25°C), reheated to 400°C, cooled to room temperature again, then reheated to 400°C again. The glass transition temperature was determined after each heating cycle. The results are included in Table II.

### Example 12:

To 100g of Torlon® AI-10, add 2g of TPP. Stir the mixture, using a stir bar, until the sample is uniform. A glass panel was coated with the sample using a #80 Meier bar. The panel was cured 30 minutes in a Thermotron forced air oven at a temperature of 260°C. The cured film had an average thickness of 15 microns. The glass transition temperature of the film was determined by DSC. Each sample was heated to 400°C, cooled to room temperature (25°C), reheated to 400°C, cooled to room temperature again, then reheated to 400°C again. The glass transition temperature was determined after each heating cycle. The results are included in Table II.

### Example 13: (comparative)

The glass transition temperature of Torlon® 4203(Solvay) rod shavings was determined by differential scanning calorimetry (DSC). Each sample was heated to 400°C, cooled to room temperature (25°C), reheated to 400°C, cooled to room temperature again, then reheated to 400°C again. The glass transition temperature was determined after each heating cycle. The results are included in Table II.

### Example 14:

To 100g of Torlon® 4203 rod shavings, add 5g of TPP. The sample was mixed using ceramic milling beads. The glass transition temperature of the powder was determined by DSC. Each sample was heated to 400°C, cooled to room temperature (25°C), reheated to 400°C, cooled to room temperature again, then reheated to 400°C again. The glass transition temperature was determined after each heating cycle. The results are included in Table II.

**Table II**

| Example. | Resin | Catalyst | Catalyst Conc. (%) | Cure Time(min) | Cure Temp(°C) | Initial Tg (°C) | 1st reheat Tg (°C) | 2nd reheat Tg (°C) |
|---|---|---|---|---|---|---|---|---|
| 3 (comparative) | Tritherm®A 981-H | - | 0 | 30 | 200 | 211 | 286 | 287 |
| 4 | Tritherm®A 981-H | TPP | 2 | 30 | 200 | 224 | 333 | 357 |
| 3 (comparative) | Tritherm®A 981-H | - | 0 | 30 | 260 | 266 | 297 | 301 |
| 4 | Tritherm®A 981-H | TPP | 2 | 30 | 260 | - | 336 | 356 |
| 5 | Tritherm®A 981-H | TPP | 1 | 30 | 260 | 286 | 321 | 338 |
| 6 | Tritherm®A 981-H | TPP | 0.5 | 30 | 260 | 283 | - | 323 |
| 7 | Tritherm®A 981-H | TPP | 0.2 | 30 | 260 | 265 | 288 | 287 |
| 8 | Tritherm®A 981-H | DPP | 2 | 30 | 260 | 279 | 305 | 323 |
| 9 | Tritherm®A 981-H | DPP | 1 | 30 | 260 | 281 | 319 | 338 |
| 10 | Tritherm®A 981-H | DPP | 0.5 | 30 | 260 | 293 | 327 | 341 |
| 11 (comparative) | Torlon AI-10 | - | 0 | 30 | 260 | 281 | 294 | 292 |
| 12 | Torlon Al-10 | TPP | 2 | 30 | 260 | 267 | 317 | - |
| 13 (comparative) | Torlon 4203 | - | 0 | 30 | 260 | 280 | 286 | 280 |
| 14 | Torlon 4203 | TPP | 5 | 30 | 260 | 288 | 291 | 295 |

The results as tabulated above show that the addition of DPP and TPP of at least 0.5% by weight, and in the range of 0.5%-2% by weight (for DPP) and 0.5%-5% by weight (for TPP), dramatically increases the glass transition temperature of the cured polyamideimide film.

### Example 15: (comparative)

Glass panels were coated with Ultratherm®A 828 (The P.D. George Co.) using a #80 Meier bar. The panels were cured for 15 and 30 minutes at temperatures of 100°C (212°F) and 125°C (257°F), and 15 minutes at 150°C (302°F) in a Thermotron forced air oven. The cured films had an average thickness of 15 microns. A small portion of the resulting film was placed in dimethyl formamide (DMF) to determine solubility. The results are included in Table III.

### Example 16:

To 100g of Ultratherm®A 828, add 2g of triphenyl phosphite (TPP). Stir the mixture, using a stir bar, until the sample is uniform. Glass panels were coated with the sample using a #80 Meier bar. The panels were cured for 15 and 30 minutes at temperatures of 100°C and 125°C, and 15 minutes at 150°C in a Thermotron forced air oven. The cured films had an average thickness of 15 microns. A small portion of the resulting film was placed in dimethyl formamide (DMF) to determine solubility. The results are included in Table III.

**Table III**

| Example | Resin | TPP Conc(%) | Cure Time(min) | Cure Temp(°C) | Solubility |
|---|---|---|---|---|---|
| 15 (comp.) | Ultratherm®A 828 | 0 | 15 | 100 | Yes |
| 15 (comp.) | Ultratherm®A 828 | 0 | 30 | 100 | Yes |
| 15(comp.) | Ultratherm®A 828 | 0 | 15 | 125 | Yes |
| 15 (comp.) | Ultratherm®A 828 | 0 | 30 | 125 | Yes |
| 15 (comp.) | Ultratherm®A 828 | 0 | 15 | 150 | Partial |
| 16 | Ultratherm®A 828 | 2 | 15 | 100 | Partial |
| 16 | Ultratherm®A 828 | 2 | 30 | 100 | Partial |
| 16 | Ultratherm®A 828 | 2 | 15 | 125 | No |
| 16 | Ultratherm®A 828 | 2 | 30 | 125 | No |
| 16 | Ultratherm®A 828 | 2 | 15 | 150 | No |

As can be seen from the data from Examples 15 and 16, the addition of TPP to the polyimide produced a chemical resistant film by curing the film at a lower temperature than was possible without the TPP. The cured polyimide film that did not include TPP was still partially soluble when cured at 150°C. However, the polyimide film that included TPP was partially soluble when cured for 15 minutes at 100°C and was not soluble (and hence not chemically resistant) when cured for 15 minutes at 125°C. This reinforces the results of Examples 1 and 2, namely, that the addition of a phosphorous based catalyst to a polyimide allows for a chemically resistant film or coating to be produced which can be cured at lower temperatures and for shorter periods of time than is required if the catalyst is not used.

As noted above, the use of a phosphorous catalyst to produce the film should reduce void formation in the film. Imides are commonly formed from amic acids. Amic acid, which has the formula: 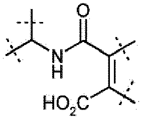 when heated forms an imide or a polyimide. As is known, when the amic acid is heated, the hydrogen from the amide group and the hydroxyl from the carboxylic group separate from the amic acid molecule, allowing the amic acid to form an imide cyclic structure. Therefore, imide formation produces water. Hence, the resulting polyimide resin contains water within the polymer matrix. The water tends to form voids in the film as the polyimide is cured.

However, when a phosphorous catalyst, such as TPP or DPP, is added to the polyimide, the hydroxyl group combines with the catalyst to release phenol, thereby avoiding the formation of water molecules. Phenol is not as volatile as water, and is a potential solvent of the polyimide matrix. Thus, during curing, the phenol will slowly migrate through the curing matrix to be released from the film, thereby avoiding formation of voids within the film.

In view of the above, it will be seen that the post adding of phosphorous catalysts, such as TPP and DPP, can reduce the cure time and temperature of polyamide films, increase the glass transition temperature of the cured film, and should reduce void formation in the cured film.

A Meier bar is a coating instrument. It allows one to apply coatings of a known thickness to a substrate such as a Q panel. The #80 refers to the size of the bar. Different sizes allow one to apply different thicknesses of coating.

## Claims

1. A method of increasing the glass transition temperature of a polyimide film, the method comprising:
mixing a phosphorous catalyst with a polyimide, the catalyst being added in an amount of between 0.1% to 10% by weight of the polyimide solution;
coating a substrate with the polyimide/catalyst mixture; and
curing the polyimide by heating the coated substrate to form a polyimide film.

2. The method of claim 1 wherein the catalyst is chosen from the group of diaryl- and triaryl-phosphites.

3. The method of claim 2 wherein the curing step is carried out at a temperature of greater than 100°C, or wherein the curing step is carried out at a temperature of between 100°C and 200°C.

4. The method of claim 2 wherein the curing step involves heating the coated substrate for up to 30 minutes

5. The method of claim 2 wherein the curing step involves heating the coated substrate for up to 15 minutes.

6. A method of decreasing the temperature and time for curing polyimide films, the method comprising:
mixing a phosphorous catalyst with a polyimide, the catalyst being added in an amount of between 0.1% to 10% by weight of the polyimide solution;
coating a substrate with the polyimide/catalyst mixture; and
curing the polyimide by heating the coated substrate at a temperature of greater than 100°C for up to 30 minutes.

7. A method of reducing void formation in cured polyimide films, the method comprising:
mixing a phosphorous catalyst with a polyimide, the catalyst being added in an amount of between 0.1% to 10% by weight of the polyimide solution;
coating a substrate with the polyimide/catalyst mixture; and
curing the polyimide by heating the coated substrate at a temperature greater than 100°C for up to 30 minutes.

## Patentansprüche

1. Verfahren zur Erhöhung der Glasübergangstemperatur eines Polyimidfilms, bei dem man:
einen Phosphorkatalysator mit einem Polyimid mischt, wobei der Katalysator in einer Menge zwischen 0,1 bis 10 Gew.-% der Polyimidlösung zugegeben wird;
ein Substrat mit der Polyimid/Katalysator-Mischung beschichtet und
das Polyimid durch Erhitzen des beschichteten Substrats zu einem Polyimidfilm härtet.

2. Verfahren nach Anspruch 1, bei dem man den Katalysator aus der Gruppe der Diaryl- und Triarylphosphite auswählt.

3. Verfahren nach Anspruch 2, bei dem man den Härtungsschritt bei einer Temperatur von mehr als 100°C durchführt oder bei dem man den Härtungsschritt bei einer Temperatur zwischen 100°C und 200°C durchführt.

4. Verfahren nach Anspruch 2, bei dem man im Härtungsschritt das beschichtete Substrat über einen Zeitraum von bis zu 30 Minuten erhitzt.

5. Verfahren nach Anspruch 2, bei dem man im Härtungsschritt das beschichtete Substrat über einen Zeitraum von bis zu 15 Minuten erhitzt.

6. Verfahren zur Verringerung der Temperatur und Zeit zur Härtung von Polyimidfilmen, bei dem man:
einen Phosphorkatalysator mit einem Polyimid mischt, wobei der Katalysator in einer Menge zwischen 0,1 bis 10 Gew.-% der Polyimidlösung zugegeben wird;
ein Substrat mit der Polyimid/Katalysator-Mischung beschichtet und
das Polyimid durch Erhitzen des beschichteten Substrats über einen Zeitraum von bis zu 30 Minuten auf eine Temperatur von mehr als 100°C zu einem Polyimidfilm härtet.

7. Verfahren zur Verringerung der Hohlraumbildung in gehärteten Polyimidfilmen, bei dem man:
einen Phosphorkatalysator mit einem Polyimid mischt, wobei der Katalysator in einer Menge zwischen 0,1 bis 10 Gew.-% der Polyimidlösung zugegeben wird;
ein Substrat mit der Polyimid/Katalysator-Mischung beschichtet und
das Polyimid durch Erhitzen des beschichteten Substrats über einen Zeitraum von bis zu 30 Minuten auf eine Temperatur von mehr als 100°C zu einem Polyimidfilm härtet.

## Revendications

1. Procédé d'augmentation de la température de transition vitreuse d'un film de polyimide, le procédé comprenant :
le mélange d'un catalyseur au phosphore avec un polyimide, le catalyseur étant ajouté dans une quantité comprise entre 0,1 % et 10 % en poids de la solution de polyimide ;
le revêtement d'un substrat avec le mélange polyimide/catalyseur ; et
le durcissement du polyimide par chauffage du substrat revêtu pour former un film de polyimide.

2. Procédé de la revendication 1 dans lequel le catalyseur est choisi dans le groupe des phosphites de diaryle et de triaryle.

3. Procédé de la revendication 2 dans lequel l'étape de durcissement est réalisée à une température supérieure à 100 °C, ou dans lequel l'étape de durcissement est réalisée à une température comprise entre 100 °C et 200 °C.

4. Procédé de la revendication 2 dans lequel l'étape de durcissement implique le chauffage du substrat revêtu pendant 30 minutes maximum.

5. Procédé de la revendication 2 dans lequel l'étape de durcissement implique le chauffage du substrat revêtu pendant 15 minutes maximum.

6. Procédé de diminution de la température et du temps de durcissement de films de polyimide, le procédé comprenant :
le mélange d'un catalyseur au phosphore avec un polyimide, le catalyseur étant ajouté dans une quantité comprise entre 0,1 % et 10 % en poids de la solution de polyimide ;
le revêtement d'un substrat avec le mélange polyimide/catalyseur ; et
le durcissement du polyimide par chauffage du substrat revêtu à une température supérieure à 100 °C pendant 30 minutes maximum.

7. Procédé de réduction de la formation de vides dans des films de polyimide durci, le procédé comprenant :
le mélange d'un catalyseur au phosphore avec un polyimide, le catalyseur étant ajouté dans une quantité comprise entre 0,1 % et 10 % en poids de la solution de polyimide ;
le revêtement d'un substrat avec le mélange polyimide/catalyseur ; et
le durcissement du polyimide par chauffage du substrat revêtu à une température supérieure à 100 °C pendant 30 minutes maximum.
